# EUROPÄISCHE PATENTANMELDUNG

(11) **EP 4 101 341 A1**
(43) Veröffentlichungstag der Anmeldung: **14.12.2022**
(21) Anmeldenummer: 22177177.7
(22) Anmeldetag: 03.06.2022
(51) Int. Cl.: A47B 13/08

(54) **HOLZPLATTE MIT WENIGSTENS EINER GRATLEISTE**

(30) Priorität: 08.06.2021 AT 504622021
(71) Anmelder: Kitzmüller, Erwin, 4180 Zwettl an der Rodl (AT)
(72) Erfinder: Kitzmüller, Erwin, 4180 Zwettl an der Rodl (AT)
(74) Vertreter: Hübscher & Partner Patentanwälte GmbH

(57) **Zusammenfassung**

Es wird eine Holzplatte (1) mit wenigstens einer metallischen Gratleiste (9) beschrieben, die in eine hinterschnittene Gratnut (2) eingesetzt ist. Um vorteilhafte Konstruktionsbedingungen zu schaffen, wird vorgeschlagen, dass die axiale Mittelebene (3) der Gratnut (2) unter einem spitzen Winkel (α) zur Plattenfläche geneigt verläuft, dass die Gratnut (2) in der Nutwand (4) mit der größeren Höhe eine Hinterschneidung (6) bildet und dass die metallische Gratleiste (9) ein U-Profil aufweist, dessen an der höheren Nutwand (4) anliegender Schenkel (10) mit einem nach außen geneigten, federnden Längsrandabschnitt (11) die Hinterschneidung (6) hintergreift, während der gegenüberliegende, an der niedrigeren Nutwand (5) anliegende Schenkel (12) mit einem einwärts geneigten Längsrandabschnitt (13) die Öffnung der Gratnut (2) abschließt.

## Beschreibung

Die Erfindung bezieht sich auf eine Holzplatte mit wenigstens einer metallischen Gratleiste, die in eine hinterschnittene Gratnut eingesetzt ist.

In hinterschnittene Gratnuten eingesetzte Gratleisten dienen dazu, Holzplatten gegenüber einem Werfen oder Verziehen zu sperren, das Quellen und Schwinden des Holzes aber zuzulassen. Die ohne Klebeverbindung in die Gratnuten eingesetzten Gratleisten müssen daher ein entsprechendes axiales Widerstandsmoment aufweisen, was bei hölzernen Gratleisten zu einem den Querschnitt der Gratnuten erheblich übersteigenden Leistenquerschnitt führt. Zur bündigen Aufnahme der Gratleisten in den Gratnuten kommen daher metallische Gratleisten zum Einsatz (DE 20 2006 013 762 U1), die zum einfacheren Einsetzen quer zur Nutachse aus zwei übereinstimmenden Profilen aufgebaut sind, sodass nach dem aufeinanderfolgenden Einsetzen in die Gratnut die beiden Profile lediglich miteinander verbunden werden müssen, beispielsweise mithilfe von Halteklammern. Abgesehen davon, dass die Gratleisten mehrteilig ausgebildet sind, ergeben sich für den Einsatz solcher metallischen Gratleisten Grenzen, weil diese Gratleisten eine Mindestdicke der Holzplatten erfordern.

Der Erfindung liegt somit die Aufgabe zugrunde, eine Holzplatte mit einer metallischen Gratleiste so auszubilden, dass auch bei kleineren Plattendicken ein bündiger Einsatz der Gratleisten möglich ist, ohne auf ein ausreichendes Widerstandsmoment verzichten zu müssen.

Ausgehend von einer Holzplatte der eingangs geschilderten Art löst die Erfindung die gestellte Aufgabe dadurch, dass die axiale Mittelebene der Gratnut unter einem spitzen Winkel zur Plattenfläche geneigt verläuft, dass die Gratnut in der Nutwand mit der größeren Höhe eine Hinterschneidung bildet und dass die metallische Gratleiste ein U-Profil aufweist, dessen an der höheren Nutwand anliegender Schenkel mit einem nach außen geneigten, federnden Längsrandabschnitt die Hinterschneidung hintergreift, während der gegenüberliegende, an der niedrigeren Nutwand anliegende Schenkel mit einem einwärts geneigten Längsrandabschnitt die Öffnung der Gratnut abschließt.

Da zufolge dieser Maßnahmen die Gratnut um ihre Achse gegenüber der Plattenfläche um einen spitzen Winkel geneigt verläuft, kann die Nuttiefe im Vergleich zu einer Gratnut, deren axiale Mittelebene senkrecht zur Plattenfläche ausgerichtet ist, größer gewählt werden, was einen größeren Nutquerschnitt mit sich bringt und damit eine Voraussetzung für Gratleisten mit einem entsprechend größeren Widerstandsmoment darstellt. Die Hinterschneidung lediglich in der Nutwand mit der größeren Höhe erlaubt den Einsatz einer einstückigen Gratleiste in Form eines U-Profils, dessen der höheren Nutwand zugeordneter Schenkel einen nach außen geneigten, federnden Längsrandabschnitt aufweist, sodass beim Einsetzen dieser Gratleiste in die Gratnut quer zur Nutachse der federnde Längsrandabschnitt durch den Öffnungsrand der Gratnut federnd einwärts geschwenkt wird, um beim Erreichen der Arbeitslage die Hinterschneidung schnappverschlussartig zu hintergreifen. In dieser durch die Hinterschneidung gesicherten Arbeitslage schließt der einwärts geneigte Längsrandabschnitt des an der niedrigeren Nutwand anliegende Schenkel der Gratleiste die Gratnut vorzugsweise bündig ab.

Um den Vorteil einer gegenüber der Plattenfläche unter einem spitzen Winkel geneigt verlaufenden Gratnut gut nützen zu können, kann die axiale Mittelebene der Gratnut unter einem Winkel von 35° bis 45° gegenüber der Plattenfläche geneigt verlaufen. Eine Nutneigung gegenüber der Plattenfläche in diesem Winkelbereich stellt eine besonders wirksame Vergrößerung des Nutquerschnitts im Vergleich zu einer Gratnut mit einer zur Plattenfläche senkrechten Mittelebene sicher, ohne eine unzulässige Schwächung der niedrigeren Nutwand im Bereich des Öffnungsrands befürchten zu müssen.

Geht der an der niedrigeren Nutwand anliegenden Schenkel der Gratleiste mit einem S-förmigen Krümmungsverlauf in seinen die Öffnung der Gratnut abschließenden Längsrandabschnitt über, so wird durch den S-förmigen Krümmungsverlauf nicht nur das Widerstandsmoment der Gratleiste erhöht, sondern auch eine teilweise Umfassung des Öffnungsrands der Gratnut erreicht, was einerseits hilft, die Arbeitslage der Gratleiste in der Gratnut festzulegen, und anderseits einen größeren Zwickelspalt zwischen dem die Nutöffnung abdeckenden Längsrandabschnitt der Gratleiste und dem Öffnungsrand der Gratnut vermeidet.

In der Zeichnung ist der Erfindungsgegenstand beispielsweise dargestellt. Es zeigen
- Fig. 1: eine erfindungsgemäße Holzplatte mit einer eingesetzten Gratleiste in einem schematischen Schnitt senkrecht zur Gratleiste und
- Fig. 2: die Holzplatte mit der Gratnut ohne Gratleiste in einem Schnitt senkrecht zur Gratnut.

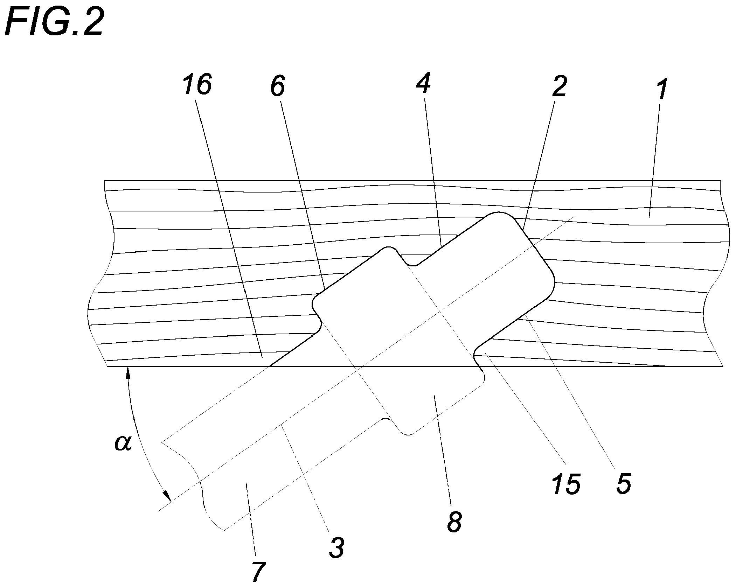

Die Holzplatte 1, beispielsweise eine Tischplatte, ist mit einer quer zur Maserung verlaufenden Gratnut 2 versehen, die eine zur Plattenfläche unter einem spitzen Winkel α von vorzugsweise 35° bis 45° geneigt verlaufende, axiale Mittelebene 3 aufweist, wie dies der Fig. 2 entnommen werden kann. Von den beiden aufgrund des geneigten Verlaufs unterschiedlich hohen Nutwänden 4, 5 ist die höhere Nutwand 4 mit einer Hinterschneidung 6 versehen. Zur Herstellung dieser Gratnut 2 kann ein in der Fig. 2 strichpunktiert angedeuteter Profilfräser 7 mit einem erweiterten Fräsabschnitt 8 zum Fräsen der Hinterschneidung 6 eingesetzt werden.

Die in die Gratnut 2 eingesetzte, metallische Gratleiste 9 wird durch ein U-Profil, vorzugsweise ein stählernes Walzprofil, gebildet, dessen an der höheren Nutwand 4 anliegender Schenkel 10 einen nach außen weggeneigten, federnden Längsrandabschnitt 11 aufweist, der die Hinterschneidung 6 der Gratnut 2 schnappverschlussartig hintergreift. Der gegenüberliegende, an der niedrigeren Nutwand 5 anliegende Schenkel 12 der Gratleiste 9 ist mit einem um den Winkel α einwärts geneigten Längsrandabschnitt 13 als mit der Holzplatte 1 bündiger Abschluss für die Gratnut 2 versehen. Der Schenkel 12 weist im Übergangsbereich zu seinem Längsrandabschnitt 13 einen S-förmigen Krümmungsverlauf 14 auf. Dieser S-förmige Krümmungsverlauf 14 erlaubt einerseits ein Anschmiegen des Schenkels 12 an den Öffnungsrand 15 der Gratnut 2 im Bereich der Nutwand 5 mit dem Vorteil einer zusätzlichen Sicherung der Arbeitslage der Gratleiste 9 in der Gratnut 2 und vergrößert anderseits das axiale Widerstandsmoment der Gratleiste 9.

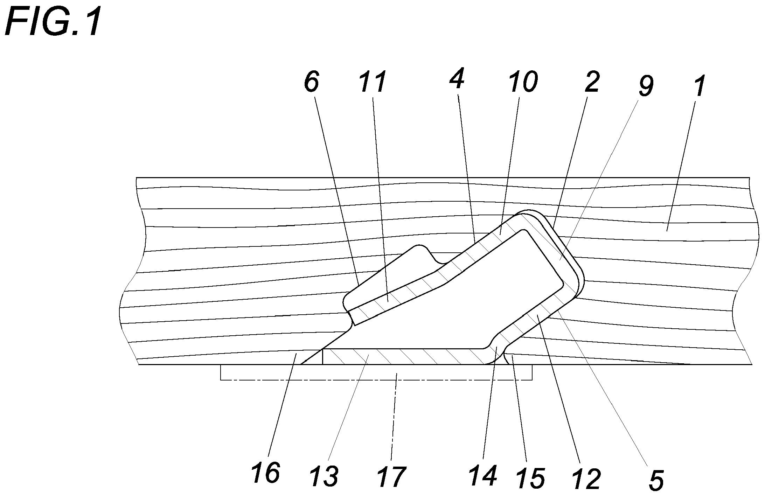

Beim Einsetzen der Gratleiste 9 in die Gratnut 2 quer zur Nutachse wird der Längsrandabschnitt 11 des der höheren Nutwand 4 zugekehrten Schenkels 10 durch den Öffnungsrand 16 der Gratnut 2 federnd einwärts gebogen, um beim Erreichen der in der Fig. 1 dargestellten Arbeitslage schnappverschlussartig die Hinterschneidung 6 zu hintergreifen, womit der Montagevorgang beendet ist. Allenfalls kann die Gratleiste 9 noch durch eine strichpunktiert angedeutete Abdeckung 17 abgedeckt werden.

Wegen der unter dem Winkel α geneigten Anordnung weist die Gratnut 2 einen im Vergleich zu einer Gratnut mit einer zur Plattenfläche senkrechten Mittelebene erheblich vergrößerten Querschnitt auf, sodass aufgrund des dadurch bedingten größeren Querschnitts die Gratleiste 9 ein entsprechend größeres Widerstandmoment besitzt, sodass auch dünnere Holzplatten 1 sicher gegen ein Werfen und Verziehen gesperrt werden können.

## Patentansprüche

1. Holzplatte (1) mit wenigstens einer metallischen Gratleiste (9), die in eine hinterschnittene Gratnut (2) eingesetzt ist, **dadurch gekennzeichnet, dass** die axiale Mittelebene (3) der Gratnut (2) unter einem spitzen Winkel (a) zur Plattenfläche geneigt verläuft, dass die Gratnut (2) in der Nutwand (4) mit der größeren Höhe eine Hinterschneidung (6) bildet und dass die metallische Gratleiste (9) ein U-Profil aufweist, dessen an der höheren Nutwand (4) anliegender Schenkel (10) mit einem nach außen geneigten, federnden Längsrandabschnitt (11) die Hinterschneidung (6) hintergreift, während der gegenüberliegende, an der niedrigeren Nutwand (5) anliegende Schenkel (12) mit einem einwärts geneigten Längsrandabschnitt (13) die Öffnung der Gratnut (2) abschließt.

2. Holzplatte nach Anspruch 1, **dadurch gekennzeichnet, dass** die axiale Mittelebene (3) der Gratnut (2) unter einem Winkel (a) von 35° bis 45° gegenüber der Plattenfläche geneigt verläuft.

3. Holzplatte nach Anspruch 1 oder 2, **dadurch gekennzeichnet, dass** der an der niedrigeren Nutwand (5) anliegenden Schenkel (12) der Gratleiste (9) mit einem
S-förmigen Krümmungsverlauf (14) in seinen die Öffnung der Gratnut (2) abschließenden Längsrandabschnitt (13) übergeht.
